# FASCICULE DE BREVET EUROPEEN

(11) **EP 2 607 165 B1**
(45) Date de publication et mention de la délivrance du brevet: **06.09.2017**
(21) Numéro de dépôt: 12196872.1
(22) Date de dépôt: 13.12.2012
(51) Int. Cl.: B60Q 1/00, F21S 8/12, F21S 8/10

(54) **Module d'éclairage comprenant au moins deux sources lumineuses installées de manière sensiblement orthogonale**
Beleuchtungsmodul mit zumindest zwei im wesentlich senkrecht zueinander angeordneten Lichtquellen
Lighting modul comprising at least two light sources arranged substantially perpendicularly

(30) Priorité: 19.12.2011 FR 1161904
(43) Date de publication de la demande: 26.06.2013
(73) Titulaire: VALEO VISION, 93012 Bobigny Cedex (FR)
(72) Inventeur: Albou, Pierre, 75013 Paris (FR); Reiss, Benoît, 95580 Margency (FR); Sanchez, Vanesa, 75011 Paris (FR)

(56) Documents cités:
- EP-A1- 2 278 217
- EP-A2- 2 037 167
- EP-A2- 2 184 532
- EP-A2- 2 280 215
- DE-U1-202007 018 181
- JP-A- 2010 067 417
- JP-A- 2011 081 968

## Description

Le secteur technique de la présente invention est celui des dispositifs ou moyens d'éclairage et/ou de signalisation pour véhicule automobile.

Il existe un besoin, dans le domaine de l'automobile, de pouvoir illuminer la route empruntée par le véhicule en un "mode éclairage route partiel", à savoir générer dans un faisceau route une ou plusieurs plages sombres correspondant aux endroits où sont présents des véhicules venant en sens inverse ou des véhicules roulant devant, de manière à éviter l'éblouissement des autres conducteurs tout en éclairant la route dans sa plus grande surface. Une telle fonction est appelée ADB (Adaptive Driving Beam, en anglais) et est décrite dans le document JP 2010 067417. Il est connu de générer cette fonction en alignant une pluralité de sources lumineuses et en pilotant l'allumage ou l'extinction de ces sources. Or, cette solution technique laisse apparaître des bandes non éclairées entre chaque bande lumineuse créée par les sources lumineuses. Un tel défaut résulte du fait que ces sources lumineuses ne peuvent pas être totalement jointives les unes à côté des autres, la technologie employée pour ces sources imposant une distance minimum entre chaque source.

Le document EP2278217A7 divulgue un module d'éclairage pour véhicule automobile remplissant une telle fonction. Il comprend une pluralité d'émetteurs lumineux, chaque émetteur lumineux étant associé à une lentille et à un miroir disposé en arrière de chaque lentille, pour renvoyer les rayons lumineux provenant de l'émetteur associé vers la lentille. Ainsi, chaque ensemble constitué de l'émetteur, de la lentille et du miroir génère une bande lumineuse, une multiplicité de bandes lumineuses ainsi créées formant un faisceau lumineux global. L'allumage ou l'extinction de certaines de ces bandes lumineuses formées verticalement permet de délimiter une zone sombre dans laquelle le véhicule dont on souhaite éviter l'éblouissement est placé.

Ce module de l'art antérieur présente un inconvénient. En effet, l'efficacité et la finesse de la fonction ADB résident dans un nombre important de bandes lumineuses, par exemple douze bandes lumineuses pour former un faisceau de type « route » de forme asymptotique, une telle forme correspondant à une approximation d'une forme en cloche, notamment du haut de la zone de de concentration d'un faisceau de type « route ». Selon le document de l'art antérieur indiqué ci-dessus, ceci implique l'implantation dans un projecteur de véhicule automobile de douze émetteurs, douze miroirs et douze lentilles. La place disponible dans le projeteur ne permet pas de loger tous ces composants, ce qui, en pratique, empêche l'utilisation du module selon cet art antérieur.

Par ailleurs, cette multiplicité de composants grève le coût de la fonction et empêche ainsi son implantation sur des véhicules de gamme moyenne et bas de gamme.

Par ailleurs, la fonction ADB générée par ces douze ensembles implique une gestion des déperditions thermiques et un alignement de chacun des douze ensembles les uns vis-à-vis des autres.

En outre, le faisceau généré par cette solution de l'art antérieur provoque un inconfort visuel pour l'utilisateur, la forme du faisceau à courte distance étant incohérente et de nature à troubler l'utilisateur du véhicule.

On comprend donc que l'implantation de la solution de l'art antérieur est à l'origine de problèmes techniques majeurs.

Le but de la présente invention est donc de résoudre les inconvénients décrits ci-dessus principalement en mettant à profit un positionnement astucieux d'au moins deux sources lumineuses, de sorte que l'une d'entre elle génère une bande lumineuse de hauteur H, sur un écran perpendiculaire à l'axe optique, alors que l'autre source lumineuse est placée à angle droit vis-à-vis de la première source, de manière à générer une bande lumineuse plus large et moins haute que la première bande lumineuse. Sachant que le faisceau général formé par la pluralité de bandes lumineuses est moins haut sur ses bords latéraux comparés à son centre, l'invention, grâce au placement des sources lumineuses, permet de suivre sans autre artifice un tel profil.

L'invention a donc pour objet un module d'éclairage pour projecteur de véhicule automobile tel que défini dans la revendication 1 et comprenant :
▪ au moins une première source lumineuse et une deuxième source lumineuse sensiblement rectangulaires, éventuellement de largeur et de longueur sensiblement identiques, lesdites sources lumineuses étant solidarisées sur un même support et espacées l'une de l'autre,
▪ un moyen de réflexion et un dispositif de projection communs auxdites sources lumineuses qui participent à la formation d'une première bande lumineuse générée par la première source lumineuse et à la formation d'une deuxième bande lumineuse générée par la deuxième source lumineuse, tel que,
▪ la deuxième source lumineuse est installée sur le support de manière à ce qu'une deuxième direction définissant sa longueur soit orientée selon un angle compris entre 80° et 100° par rapport à une première direction définissant une longueur de la première source lumineuse, et en ce que
▪ le module d'éclairage émet un faisceau lumineux remplissant une fonction « éclairage route partiel ».

En d'autres termes, la deuxième source lumineuse est agencée dans le module d'éclairage de sorte que sa deuxième direction définissant sa longueur soit sensiblement parallèle à l'horizon. On exploite ainsi la longueur de la deuxième source lumineuse pour former une portion latérale du faisceau, et sa largeur pour former une hauteur de la portion latérale du faisceau. L'invention permet alors d'utiliser moins de systèmes optiques distincts, notamment deux fois moins de collecteur et de lentille, que dans l'art antérieur, avec un profil de faisceau global répondant à la norme pour un faisceau de type « route ».

De manière avantageuse, la perpendicularité de la deuxième source lumineuse par rapport à la première source lumineuse s'entend d'un cas où au moins un bord de la deuxième source lumineuse parallèle à la deuxième direction est contenu dans une zone définie par la longueur de la première source lumineuse.

Le moyen de réflexion et le dispositif de projection sont communs aux deux sources lumineuses en ce sens que seuls les faisceaux générés par ces sources lumineuses sont reflétés et focalisés par ces composants.

Selon un mode de réalisation, l'angle d'orientation de la deuxième source lumineuse par rapport à la première source lumineuse est égal à 90°. On limite alors les distorsions pouvant apparaître sur le bord latéral du faisceau.

L'espace qui sépare la première source lumineuse de la deuxième source lumineuse génère une zone non-éclairée par le module d'éclairage, située entre la première bande lumineuse et la deuxième bande lumineuse. On organise ainsi un entrelacement de plusieurs bandes lumineuses générées par des modules d'éclairage distincts.

L'espace est dimensionné pour que la zone non-éclairée soit sensiblement égale, par exemple à au moins deux fois une largeur de la première bande lumineuse, mesurée dans un plan horizontal sur un écran perpendiculaire à un axe optique du projecteur et situé à 25 mètres de ce dernier. Le ratio évoqué ci-dessus peut bien entendu être adapté à la largeur d'une bande lumineuse venant combler cette espace.

Avantageusement, la première bande lumineuse résulte d'un premier faisceau lumineux qui présente une ouverture comprise entre 0,5° et 4°, mesurée dans un plan horizontal. Une ouverture comprise entre 1° et 2° est particulièrement adaptée pour rester dans un packaging compatible avec un projecteur actuel.

L'invention couvre aussi un projecteur pour véhicule automobile comprenant au moins un premier module d'éclairage et un deuxième module d'éclairage selon l'une quelconque des caractéristiques présentées ci-dessus.

L'invention prévoit d'ajout d'un module additionnel d'éclairage comprenant un support sur lequel sont solidarisées au moins deux sources lumineuses additionnelles, lesdites sources étant agencées pour qu'une longueur de chaque source s'étende selon une direction parallèle. C'est une manière simple et économique de former un faisceau global comprenant six bandes lumineuses.

Dans une variante de l'invention, la première source lumineuse du premier module d'éclairage et la première source lumineuse du deuxième module d'éclairage sont installées entre la deuxième source lumineuse du premier module d'éclairage et la deuxième source du deuxième module d'éclairage. On notera que le premier module d'éclairage est par exemple aligné sur une droite sensiblement horizontale avec le deuxième module d'éclairage.

L'invention couvre également le cas où le premier et le deuxième module d'éclairage sont alignés sur une droite quelconque entre une droite horizontale et une droite verticale.

Enfin, l'invention couvre le cas où le premier et le deuxième module d'éclairage sont alignés sur une droite verticale.

La première bande lumineuse du premier module d'éclairage résulte d'un premier faisceau lumineux qui présente une inclinaison sensiblement égale, mesurée dans un plan horizontal par rapport à un axe optique du projecteur, à la moitié de l'ouverture du faisceau correspondant mesurée dans un plan horizontal.

La première source lumineuse du deuxième module d'éclairage génère une troisième bande lumineuse qui résulte d'un troisième faisceau lumineux présentant une inclinaison par rapport à l'axe optique du projecteur, mesurée dans le plan horizontal sensiblement de valeur égale et de signe opposé a celle de la première bande lumineuse du premier module d'éclairage. Une telle valeur est par exemple égale à 1° ou 2°.

Un tel projecteur peut comprendre un troisième module d'éclairage et un quatrième module d'éclairage conformes aux caractéristiques présentées ci-dessus, le premier module d'éclairage et le deuxième module d'éclairage étant installés entre le troisième module d'éclairage et le quatrième module d'éclairage, la deuxième source lumineuse du troisième module d'éclairage étant installée entre la première source lumineuse du troisième module d'éclairage et la deuxième source lumineuse du deuxième module d'éclairage alors que la deuxième source lumineuse du quatrième module d'éclairage est installée entre la deuxième source lumineuse du premier module d'éclairage et la première source lumineuse du quatrième module d'éclairage.

On comprend donc que les quatre modules d'éclairage présentés ci-dessus sont alignés sur une droite rectiligne, avantageusement horizontale.

L'invention couvre aussi la situation où les quatre modules d'éclairage sont installés deux-à-deux, de manière séparée, et par exemple les uns au dessus des autres.

L'invention vise encore la situation où les quatre modules sont alignés sur une droite quelconque entre une droite horizontale et une droite verticale.

Enfin, l'invention couvre la situation où les quatre modules d'éclairage sont alignés sur une droite verticale.

De manière avantageuse, la première source lumineuse du troisième module d'éclairage génère une cinquième bande lumineuse qui résulte d'un cinquième faisceau lumineux présentant une inclinaison sensiblement égale par rapport à l'axe optique du projecteur, mesurée dans un plan horizontal, à la somme de l'ouverture angulaire mesurée dans un plan horizontal de cette cinquième bande lumineuse et de la moitié de l'ouverture angulaire de la première bande lumineuse mesurée dans un plan horizontal. A titre d'exemple, cette somme est égale à 1,5°, ou encore 3°. La première source lumineuse du quatrième module d'éclairage génère une septième bande lumineuse inclinée symétriquement, c'est-à-dire de valeur égale et de signe opposé.

L'invention couvre enfin un système d'éclairage pour véhicule automobile comprenant un premier projecteur et un deuxième projecteur tel que défini ci-dessus, le premier projecteur projetant un premier faisceau d'éclairage généré par une pluralité de modules d'éclairage, le deuxième projecteur projetant un deuxième faisceau d'éclairage généré par une pluralité de modules d'éclairage, la pluralité de modules d'éclairage du deuxième projecteur étant agencée de manière à décaler le deuxième faisceau d'éclairage par rapport au premier faisceau d'éclairage d'une demi-largeur de la première bande lumineuse générée par le premier module d'éclairage installé dans le premier projecteur.

De manière complémentaire, la pluralité de modules d'éclairage du deuxième projecteur est inclinée dans un plan horizontal d'une demi-largeur de la première bande lumineuse, une telle inclinaison étant par exemple égale à 1° par rapport à l'axe optique du premier projecteur.

Un tout premier avantage selon l'invention réside dans la possibilité de former un profil asymptotique de faisceau avec moins de modules que selon l'art antérieur, en mettant à profit le caractère rectangulaire des sources lumineuses ainsi que leurs positionnements relatifs.

Un autre avantage réside dans la possibilité de standardiser la fabrication de ces modules, puisqu'il emploie un même type de source lumineuse quelque soit la position de ces sources une fois solidarisées sur le support.

Enfin, le chevauchement du premier faisceau généré par un premier projecteur par le deuxième faisceau généré par le deuxième projecteur permet d'augmenter la résolution de la fonction ADB mise en oeuvre par le système selon l'invention.

D'autres caractéristiques, détails et avantages de l'invention ressortiront plus clairement à la lecture de la description donnée ci-après à titre indicatif en relation avec des dessins dans lesquels :
- la figure 1 est une vue schématique montrant quatre modules d'éclairage selon l'invention,
- la figure 2 est une vue en perspective des composants utilisés dans un module d'éclairage,
- la figure 3 est une vue de détail montrant le module d'éclairage selon l'invention,
- la figure 4 est une vue schématique montrant une variante de réalisation à trois modules d'éclairage,
- la figure 5 est une vue montrant une projection lumineuse générée par quatre modules d'éclairage montés dans un premier projecteur d'un véhicule automobile,
- la figure 6 est une vue illustrant une projection lumineuse générée par quatre modules d'éclairage montés dans un deuxième projecteur d'un véhicule automobile,
- la figure 7 est une représentation d'un faisceau lumineux global formé par la projection lumineuse de la figure 3 combinée à la projection lumineuse de la figure 4.

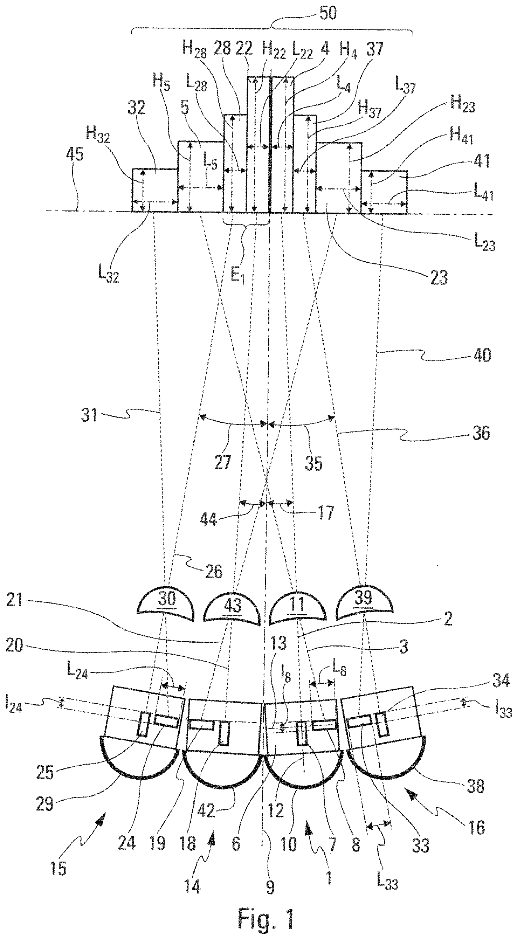

La figure 1 illustre un module d'éclairage 1 destiné à équiper un véhicule automobile, notamment en étant installé à l'intérieur d'un projecteur avant du véhicule. Ce projecteur est apte à émettre un ou plusieurs faisceaux, notamment un faisceau de type route d'axe optique référencé 9.

Un tel module d'éclairage 1, ci-après appelé premier module d'éclairage, participe à la mise en oeuvre d'une fonction ADB, c'est-à-dire un allumage et une extinction sélectifs du faisceau lumineux de type route.

Ce premier module d'éclairage 1 assure la fourniture d'au moins un premier faisceau lumineux 2 et d'un deuxième faisceau lumineux 3, ces faisceaux formant chacun une bande lumineuse de forme rectangulaire, respectivement nommée première bande lumineuse 4 et deuxième bande lumineuse 5. Ces bandes lumineuses sont ici rendues visibles par projection sur un écran perpendiculaire à l'axe optique 9 et situé à 25 mètres du premier module d'éclairage 1.

Le premier dispositif d'éclairage 1 comprend un support 6 sur lequel sont solidarisés au moins une première source lumineuse 7 et une deuxième source lumineuse 8 de forme sensiblement rectangulaire. Par rectangulaire, il faut comprendre toute forme de source lumineuse présentant une longueur plus importante que sa largueur, prises dans un même plan. La figure 1 montre une source lumineuse de forme rectangulaire à angles vifs mais l'invention couvre aussi une forme rectangulaire à angles chanfreinés ou arrondis.

Pour faciliter la standardisation et la fabrication d'un module d'éclairage selon l'invention, la première source lumineuse 7 et la deuxième source lumineuse 8 sont de dimensions sensiblement identiques, notamment identiques. Le terme « sensiblement » vise le cas de sources lumineuses de dimensions similaires mais où, par exemple, les tolérances de fabrication impliqueraient une légère différence.

La première source lumineuse 7 génère le premier faisceau lumineux 2 et la deuxième source lumineuse 8 génère le deuxième faisceau lumineux 3.

La première source lumineuse 7 s'étend selon une première direction 12 qui définit la longueur de la première source lumineuse. Cette première direction 12 est parallèle, et éventuellement confondue, avec la direction prise par le premier faisceau 2. Selon un exemple de réalisation, cette première source lumineuse mesure 2 mm de long, mesurée selon la première direction 12, et 1 mm de large, mesurée selon une droite perpendiculaire à la première droite 12.

De manière préférentielle, de telles sources lumineuses sont des diodes électroluminescentes.

La première source lumineuse 7 et la deuxième source lumineuse 8 sont agencées sur le support 6 de manière à projeter une deuxième bande lumineuse 5 espacée de la première bande lumineuse 4. En l'absence d'autre module d'éclairage, l'espace qui sépare cette première bande lumineuse 4 de la deuxième bande lumineuse 5 forme une zone non-éclairée par le premier module d'éclairage 1, un tel espace présentant une largeur symbolisée par la référence E₁.

Le premier module d'éclairage 1 comprend encore un moyen de réflexion 10 dont la fonction est de collecter les rayons lumineux émis par la première source lumineuse 7, la deuxième source lumineuse 8, et tout émetteur lumineux supplémentaire qui peut être solidarisé sur le support 6. Selon un exemple de réalisation, un tel moyen de réflexion 10 est un réflecteur, par exemple un miroir parabolique, elliptique, à surfaces complexes ou cylindrique d'axe horizontal. Dans ce dernier cas, le réflecteur collecte les rayons lumineux pour former une image virtuelle de la source lumineuse, sous forme d'une bande d'une hauteur donnée et d'une largeur égale à celle de la source lumineuse. Un dispositif de projection projette ensuite cette image sur l'écran à très grande distance (typiquement plus de 25m), la focale du dispositif de projection et la largeur de la source lumineuse déterminant la largeur de la bande lumineuse, alors que cette même focale et la hauteur de la source lumineuse déterminent la hauteur de la bande lumineuse. En outre, le réflecteur est arrangé pour que l'image virtuelle n'offre pas une répartition de luminance identique à celle de la source lumineuse, en concentrant le faisceau sur la partie haute de la bande lumineuse. Une telle structure permet d'obtenir la répartition voulue dans les bandes lumineuses, notamment le maximum non centré et une décroissance progressive vers le haut. Pour une explication plus précise, on se reportera au document EP 2 278 217 A, dont le contenu est intégralement incorporé par référence.

Ainsi, un seul et unique moyen de réflexion 10 permet de renvoyer les faisceaux lumineux émis par la première source lumineuse 7 et par la deuxième source lumineuse 8.

Le premier module d'éclairage 1 comprend encore un dispositif de projection 11 dont la fonction est projeter le premier faisceau 2, le deuxième faisceau 3 et éventuellement tous les autres faisceaux générés par des émetteurs lumineux supplémentaires solidarisés sur le support 6. De manière particulière, un tel dispositif de projection 11 peut être un dispositif de focalisation. On comprend donc qu'il s'agit d'un seul et unique dispositif de projection qui participe à la formation de plusieurs bandes lumineuses, notamment la première bande lumineuse 4 et la deuxième bande lumineuse 5. Selon un exemple de réalisation, un tel dispositif de projection 17 est une lentille présentant notamment une face cylindrique et une face convexe.

La deuxième source lumineuse 8 est orientée à angle droit par rapport à la première source lumineuse 7. Autrement dit, la deuxième source lumineuse 8 est installée sur le support 6 de manière à ce qu'une deuxième direction 13 définissant sa longueur soit orientée selon un angle compris entre 80° et 100° par rapport à la première direction 12. Un placement et une forme optimisée des bandes lumineuses 4 et 5 seront obtenus si la deuxième direction 13 forme un angle de 90° avec la première direction 12.

En d'autres termes, la première droite 12, symbolisant la longueur de la première source lumineuse, est sensiblement perpendiculaire à une troisième droite 45 passant par un bord inférieur de chaque bande lumineuse alors que la deuxième droite 13, symbolisant la longueur de la deuxième source lumineuse, est sensiblement parallèle à cette troisième droite 45. Cette troisième droite 45 est parallèle à l'horizon.

La première source lumineuse 7 est distincte de la deuxième source lumineuse 8. Un espace est formé entre ces deux sources lumineuses et cet espace, combiné avec le moyen de réflexion 10 et le dispositif de projection 11, conditionne une largeur de la zone non-éclairée située entre la première bande lumineuse 4 et la deuxième bande lumineuse 4.

La largeur de la première bande lumineuse 4, mesurée selon une direction perpendiculaire à l'axe optique 9 du projecteur et dans le plan horizontal, est référencée L₄. Selon l'invention, le module d'éclairage 1 est agencé pour que la largeur L₅ de la deuxième bande lumineuse 5 soit égale à L₈/I₈ x L₄, L₈ correspondant à une longueur de la deuxième source lumineuse 8, I₈ correspondant à une largeur de la deuxième source lumineuse 8, et L₄ étant la largeur de la première bande lumineuse 4. Une telle structure est obtenue par l'espace qui sépare les deux sources lumineuses une fois fixées sur le support 6.

La première bande lumineuse 4 est encore définie par sa hauteur H₄, mesurée selon une direction perpendiculaire à l'axe optique 9 du projecteur et au plan horizontal. La deuxième bande lumineuse 5 est définie par une hauteur H₅ égale à I₈/L₈ x H₄. Une telle structure est obtenue notamment par l'orientation à angle droit des sources lumineuses rectangulaires, de dimensions identiques, l'une par rapport à l'autre.

Dans le cas d'une source lumineuse de longueur 2mm et de largeur 1 mm, le ration L/I est égal à 0,5.

On notera tout particulièrement que la première source lumineuse 7 et la deuxième source lumineuse 8 présentent chacune un bord aligné sur une même droite, un tel bord étant celui opposé au moyen de réflexion 10 par rapport à la source lumineuse. En d'autres termes, ce bord est celui qui fait directement face au dispositif de projection 11. Une telle disposition permet d'aligner une tranche inférieure de chaque bande lumineuse.

Le premier module d'éclairage 1 est incliné par rapport à l'axe optique 9 du projecteur. De manière plus précise, le module d'éclairage 1 est installé dans le projecteur de manière à ce qu'il soit formé une inclinaison 17 comprise, par exemple, entre 0,5 et 4° entre la direction empruntée par le premier faisceau 2 et l'axe optique 9 du projecteur, mesurée dans le plan horizontal.

De manière générale, une valeur de cette inclinaison 17 choisie à la moitié de l'ouverture du premier faisceau lumineux évite des déformations de bandes lumineuses. Par ailleurs, la compacité est améliorée ce qui facilite l'intégration d'une pluralité de modules d'éclairage à l'intérieur d'un projecteur. En d'autres termes, l'invention est arrangée pour que l'inclinaison soit coordonnée avec l'ouverture concernée.

La figure 1 montre un deuxième module d'éclairage 14 distinct du premier module d'éclairage 1, ainsi qu'un troisième module d'éclairage 15 et un quatrième module d'éclairage 16. Ces quatre modules d'éclairage sont agencés côte-à-côte dans un même projecteur avant du véhicule.

Les éléments techniques composants chaque module d'éclairage sont identiques à ceux formant le premier module d'éclairage 1. Autrement dit, chacun des quatre modules d'éclairage illustrés sur cette figure 1 comprend deux sources lumineuses rectangulaires, de dimensions sensiblement identiques, implantées à angle droit, un support recevant lesdites sources, un moyen de réflexion et un dispositif de projection. En revanche, la disposition de la deuxième source lumineuse sur le support varie d'un module à l'autre, ainsi que les surfaces du réflecteur et des faces d'entrée et de sortie du dispositif de projection, notamment la lentille.

A titre d'exemple de réalisation, le deuxième module d'éclairage 14 forme une symétrie du premier module d'éclairage 1 par rapport à l'axe optique 9 du projecteur. Au niveau du premier module d'éclairage 1, on constate que la première source lumineuse 7 est interposée entre l'axe optique 9 et la deuxième source lumineuse 8, cette dernière étant alors à droite de la première source lumineuse 7 selon une vue de dessus du module d'éclairage.

La première source lumineuse 18 du deuxième module d'éclairage 14 est également interposée entre l'axe optique 9 et une deuxième source lumineuse 19 du deuxième module d'éclairage 14. Vue de dessus, cette deuxième source lumineuse 19 est alors installée à gauche de la première source lumineuse 18 du deuxième module d'éclairage 14, en formant un angle compris entre 80° et 100° ; et avantageusement 90° par rapport à la première source lumineuse 18 du deuxième module d'éclairage 14.

Une telle disposition permet de former un troisième faisceau lumineux 20 généré par la première source lumineuse 18 du deuxième module d'éclairage, ainsi qu'un quatrième faisceau lumineux 21 généré par la deuxième source lumineuse 19 du deuxième module d'éclairage 14.

Le troisième faisceau lumineux 20 est à l'origine d'une troisième bande lumineuse 22 immédiatement adjacente à la première bande lumineuse 14 et le quatrième faisceau lumineux 21 forme une quatrième bande lumineuse 23.

Le deuxième module d'éclairage 14 est agencé pour qu'une largeur L₂₂ de la troisième bande lumineuse 22 soit égale à la largeur L₄ de la première bande lumineuse 4. Une hauteur H₂₂ de cette troisième bande lumineuse 22 est aussi identique à la hauteur H₄ de la première bande lumineuse 4.

En ce qui concerne la quatrième bande lumineuse 23, celle-ci est de dimensions équivalentes aux dimensions de la deuxième bande lumineuse 5. Autrement dit, le deuxième module d'éclairage 14 comprend des moyens pour qu'une hauteur H₂₃ et une largeur L₂₃ de la quatrième bande lumineuse 23 soient égales à la hauteur H₅ et la largeur L₅ de la deuxième bande lumineuse 5.

On se reportera aux explications en rapport avec le premier module d'éclairage 1 pour connaître les moyens de mise en oeuvre, en particulier la présence d'un moyen de réflexion 42 et d'un dispositif de projection 43 spécifiques du deuxième module d'éclairage 14.

On constate que la troisième bande lumineuse 22 comble en partie la zone non-éclairée formée entre la première bande lumineuse 4 et la deuxième bande lumineuse 5. De même, la zone non-éclairée formée entre la troisième bande lumineuse 22 et la quatrième bande lumineuse 23 est également au moins partiellement comblée par la présence de la première bande lumineuse 4.

Le deuxième module d'éclairage 14 est inclinée par rapport l'axe optique 9 selon une inclinaison 44 comprise, par exemple, entre -0,5 et -4°, avantageusement -1 °, la valeur étant choisie identique à la valeur d'inclinaison du premier module d'éclairage 1, au signe près. Cette inclinaison 44 se mesure entre l'axe optique 9 du projecteur et une droite passant par le troisième faisceau lumineux 20, dans un plan horizontal.

De manière générale, une valeur de cette inclinaison 44 choisie à la moitié de l'ouverture du troisième faisceau lumineux évite des déformations de bandes lumineuses. Par ailleurs, la compacité est améliorée ce qui facilite l'intégration d'une pluralité de modules d'éclairage à l'intérieur d'un projecteur. En d'autres termes, l'invention est arrangée pour que l'inclinaison soit coordonnée avec l'ouverture concernée.

Le troisième module d'éclairage 15 est installé par exemple à côté du deuxième module d'éclairage 14, ce dernier étant intercalé entre ce troisième module d'éclairage 15 et le premier module d'éclairage 1. La structure du troisième module d'éclairage et la position de sa deuxième source lumineuse 24 par rapport à sa première source lumineuse 25 sont identiques à celles décrites en rapport avec le premier module d'éclairage 1. On se reportera donc aux explications en rapport avec le premier module d'éclairage pour en connaître le détail.

Le troisième module d'éclairage présente également une inclinaison 27 par rapport à l'axe optique 9 du projecteur. Cette inclinaison 27 se mesure entre une direction prise par un cinquième faisceau lumineux 26 généré par la première source lumineuse 25 du troisième module d'éclairage 15 et l'axe optique 9, mesurée dans un plan horizontal. A titre d'exemple, la valeur de cette inclinaison est égale à - 3°, notamment quand l'inclinaison entre le troisième faisceau 20 et l'axe optique 9 est égale à -1°.

La première source lumineuse 25 du troisième module d'éclairage 15, via le cinquième faisceau lumineux 26, génère une cinquième bande lumineuse 28 de largeur L₂₈ égale à la différence entre la largeur de l'espace entre la première bande lumineuse 4 et la deuxième bande lumineuse 5 et la largeur L₂₂ de la troisième bande lumineuse 22. Avantageusement, L₂₂ = L₄ = L₂₈, ce qui permet un entrelacement simple à mettre en oeuvre et efficace. Cette cinquième bande lumineuse 28 s'étend dans la zone non-éclairée située entre la première bande lumineuse 4 et la deuxième bande lumineuse 5, entre cette dernière et la troisième bande lumineuse 22. La zone non-éclairée par le premier module d'éclairage 1 est ainsi éclairée en totalité par le deuxième module d'éclairage 14, notamment via son troisième faisceau lumineux 20, combiné au troisième module d'éclairage 15, via le cinquième faisceau lumineux 26.

Cette cinquième bande lumineuse 28 est définie également par sa hauteur référencée H₂₈, qui est avantageusement égale à ¾ de H₄, c'est-à-dire la hauteur de la première bande lumineuse 4. Une telle différence de hauteur entre la hauteur de la première bande lumineuse 4 et celle de la cinquième bande lumineuse 28 résulte du moyen de réflexion 29 et du dispositif de projection 30 affectés au troisième module d'éclairage 15.

La deuxième source lumineuse 24 du troisième module d'éclairage forme un sixième faisceau lumineux 31 qui se projette sur l'écran sous la forme d'une sixième bande lumineuse 32 immédiatement adjacente à la deuxième bande lumineuse 5, cette dernière étant intercalée entre la cinquième et la sixième bandes lumineuses. Cette sixième bande lumineuse 32 est définie par une largeur L₃₂ égale à L₂₄/I₂₄ x L₂₂, soit 2 x L₂₂ dans le cas d'une source de longueur double de sa largeur, ou encore le double de la largeur de la première bande lumineuse 4 si L₂₂ = L₄. L₂₄ correspond à une longueur de la deuxième source lumineuse 24 du troisième module d'éclairage alors que I₂₄ définit une largeur de cette même source lumineuse.

Cette sixième bande lumineuse 32 est définit par une hauteur H₃₂, avantageusement égale à 3/4 de H₅, soit 3/8 de la hauteur H₄ de la première bande lumineuse 4 dans la configuration préférée. Une telle hauteur résulte du caractère rectangulaire et de l'orientation comprise entre 80° et 100° de la deuxième source lumineuse 24 par rapport à la première source lumineuse 25 du troisième module d'éclairage 15. Cette hauteur H₃₂ est également mise en oeuvre par le moyen de réflexion 29 et le dispositif de projection 30 du troisième module d'éclairage 15.

Un quatrième module d'éclairage 16 est installé à côté du premier module d'éclairage 1, ce dernier étant intercalé entre ce quatrième module d'éclairage 16 et le deuxième module d'éclairage 14. La structure du quatrième module d'éclairage 16 et la position de sa deuxième source lumineuse 33 par rapport à sa première source lumineuse 34 sont identiques à celles décrites en rapport avec le deuxième module d'éclairage 14. On se reportera donc aux explications en rapport avec ce deuxième module d'éclairage pour en connaître le détail.

Le quatrième module d'éclairage 16 présente une inclinaison 35 par rapport à l'axe optique 9 du projecteur. Cette inclinaison 35 se mesure entre une direction prise par un septième faisceau lumineux 36 généré par la première source lumineuse 34 du quatrième module d'éclairage 16 et l'axe optique 9, mesurée dans un plan horizontal. A titre d'exemple, la valeur de cette inclinaison est égale à 3°, notamment quand l'inclinaison entre le premier faisceau 2 et l'axe optique 9 est égale à 1°.

La première source lumineuse 34 du quatrième module d'éclairage 16, via le septième faisceau lumineux 36, génère une septième bande lumineuse 37 de largeur L₃₇ égale à la différence entre la largeur de l'espace entre la troisième bande lumineuse 22 et la quatrième bande lumineuse 23 et la largeur L₄ de la première bande lumineuse 4. Avantageusement, L₃₇ = L₄ = L₂₂, ce qui permet faciliter l'entrelacement entre projecteurs. L'invention couvre aussi le cas où la largeur L₃₇ de la septième bande lumineuse 37 est de taille plus large ou plus étroite que la première bande lumineuse 4 ou que la troisième bande lumineuse 22.

Cette septième bande lumineuse 37 s'étend dans la zone non-éclairée située entre la troisième bande lumineuse 22 et la quatrième bande lumineuse 23, entre cette dernière et la première bande lumineuse 4. La zone non-éclairée par le deuxième module d'éclairage 14 est ainsi éclairée en totalité par le premier module d'éclairage 1, notamment via son premier faisceau lumineux 2, combiné au quatrième module d'éclairage 16, via le septième faisceau lumineux 36.

Cette septième bande lumineuse 37 est définie par sa hauteur référencée H₃₇, qui est avantageusement égale à % de H₄, c'est-à-dire de la hauteur de la première bande lumineuse 4. Une telle différence entre la hauteur de la première bande lumineuse 4 et celle de la septième bande lumineuse 37 résulte du moyen de réflexion 38 et du dispositif de projection 39 affectés au quatrième module d'éclairage 16.

La deuxième source lumineuse 33 du quatrième module d'éclairage 16 forme un huitième faisceau lumineux 40 qui se projette sur l'écran sous la forme d'une huitième bande lumineuse 41 immédiatement adjacente à la quatrième bande lumineuse 23, cette dernière étant intercalée entre la septième et la huitième bande lumineuse 40. Cette huitième bande lumineuse 41 est définie par une largeur L₄₁ égale L₃₃/I₃₃ x L₄, soit 2 x L₄ dans le cas exemplatif d'une source de longueur double de sa largeur, ou encore le double de la largeur de la troisième bande lumineuse 22 si L₄ = L₂₂. L₃₃ correspond à une longueur de la deuxième source lumineuse 33 du quatrième module d'éclairage 16 alors que I₃₃ définit une largeur de cette même source lumineuse.

Cette huitième bande lumineuse 41 est définit par une hauteur H₄₁ égale par exemple à 3/8 de la hauteur H₄ de la première bande lumineuse 4, dans la configuration préférée. Une telle hauteur résulte de l'orientation comprise entre 80° et 100° de la deuxième source lumineuse 33 par rapport à la première source lumineuse 34 du quatrième module d'éclairage 16. Cette hauteur est également mise en oeuvre par le moyen de réflexion 38 et le dispositif de projection 39 du quatrième module d'éclairage 16.

De la première bande lumineuse 4 à la huitième bande lumineuse 41 est formé un faisceau d'éclairage 50 projeté par un unique projecteur, un tel faisceau présentant un profil asymptotique particulièrement adapté à la fonction photométrique « route » d'un véhicule automobile. Un tel faisceau d'éclairage 50 du projecteur 50 est mis en oeuvre par seulement quatre modules d'éclairage, utilisant tous des composants similaires.

La variation de hauteur et de largeur des bandes lumineuses détaillées ci-dessus est obtenue avec des sources lumineuses identiques, moyennant un changement des paramètres optiques de conception des différents ensembles formés par la source lumineuse, le moyen de réflexion et le dispositif de projection associés.

Le moyen de réflexion et le dispositif de projection sont calculés pour produire une anamorphose de l'émetteur de chaque source lumineuse. En particulier, un ensemble moyen de réflexion - dispositif de projection, associé à une source lumineuse, est calculé pour dilater verticalement la bande lumineuse produite. Ce mode de réalisation permet d'obtenir une bande lumineuse avec une intensité lumineuse décentrée verticalement, c'est-à-dire écartée du centre de cette bande lumineuse. Le maximum d'intensité lumineuse est positionné, par exemple, vers le bas de la bande lumineuse considérée.

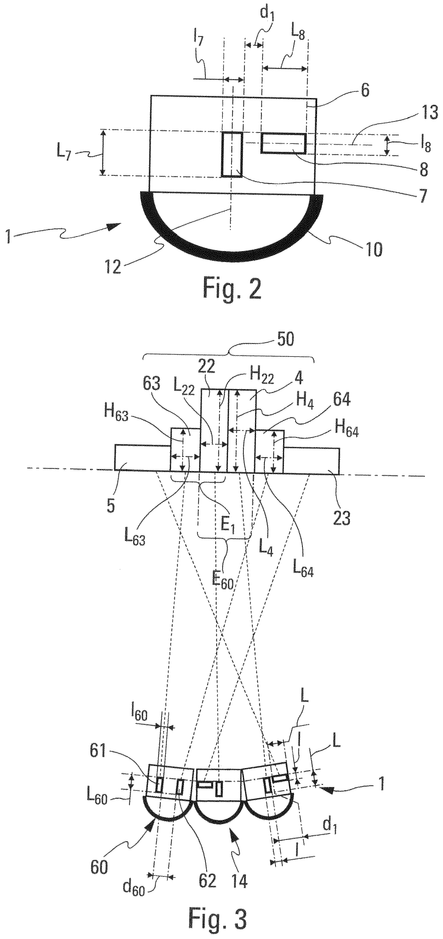

La figure 2 montre en détails un module d'éclairage conforme à l'invention. Les éléments expliqués ci-dessous sont applicables aux premier, deuxième, troisième et quatrième modules d'éclairage commentés ci-dessus.

La première source lumineuse 7 et la deuxième source lumineuse 8 sont de forme rectangulaire. La première source lumineuse est ainsi définie par une longueur L, parallèle à l'axe optique, et par une largeur I perpendiculaire à l'axe optique.

La deuxième source lumineuse 8 est définie par une longueur L, perpendiculaire à l'axe optique, et par une largeur 1 parallèle à l'axe optique. Comme les sources lumineuses sont identiques leurs longueurs et les largeurs sont égales.

Ces deux sources lumineuses sont séparées par une distance d₁ mesurée entre un bord de la première source lumineuse 7 définissant sa longueur L₇ et un bord de la deuxième source lumineuse 8 définissant sa largeur I₈. Le module d'éclairage selon l'invention est agencé pour que la distance d₁ détermine une largeur E₁ (figure 1) de l'espace dépourvue de lumière entre la première bande lumineuse et la deuxième bande lumineuse, un tel espace étant comblé au moins en partie par une lumière émise par l'un des autres modules d'éclairage, comme cela a été expliqué ci-dessus.

Le module d'éclairage est caractérisé par l'une et/ou l'autre des relations suivantes :
- L₄/I = L₅/L = E₁/d₁,
- E₁ > L₄, de préférence E₁≥2 x L₄, de préférence E₁ = 2 x L₄,
où L₄ est la largueur de la première bande lumineuse, I est la largeur des sources lumineuses (I = I₇ = I₈), L₅ est la largeur de la deuxième bande lumineuse, L est la longueur des sources lumineuses (L = L₇ = L₈), E₁ est la largeur de l'espace dépourvu de lumière entre ces deux bandes lumineuses et d₁ est la distance qui sépare les deux sources lumineuses,
- H₄/L = H₅/I, où H₄ est la hauteur de la première bande lumineuse, L est la longueur des sources lumineuses, H₅ est la hauteur de la deuxième bande lumineuse et I est la largeur des sources lumineuses.

La figure 3 montre une variante de réalisation différente de la figure 1, en ce qu'elle comprend uniquement deux modules d'éclairage 1, 14 conformes à l'invention et un module additionnel d'éclairage 60.

Pour la description du premier module d'éclairage 1 et du deuxième module d'éclairage 14, on se reportera à la description des figures 1 et 2.

Le module additionnel d'éclairage 60 est par exemple installé à gauche du deuxième module d'éclairage 14, mais celui-ci pourrait être placé au-dessus, en dessous ou séparé des premier et deuxième modules d'éclairage 1 et 14.

La structure du module additionnel d'éclairage 60 est similaire à celle détaillée ci-dessus, en ce sens qu'il comprend un support qui reçoit deux sources lumineuses, un moyen de réflexion et un dispositif de projection. En revanche, la première source lumineuse 61 et la deuxième source lumineuse 62 du module additionnel sont alignées selon des axes, par exemple, parallèles. Autrement dit, une longueur de la première source lumineuse 61 du module additionnel 60 est parallèle à une longueur de la deuxième source lumineuse 62 de ce même module, notamment quand ces sources sont de forme rectangulaire.

Dans l'exemple de la figure 3, le faisceau global 50 est formé par la combinaison de six bandes lumineuses, générées deux-à-deux par chaque module d'éclairage.

Le premier module d'éclairage 1 génère ainsi la première bande lumineuse 4 et la deuxième bande lumineuse 5, le deuxième module d'éclairage 14 génère la troisième bande lumineuse 22 et la quatrième bande lumineuse 23 et le module additionnel d'éclairage 60 génère une première bande lumineuse additionnelle 63 au moyen de la première source lumineuse 61 et une deuxième bande lumineuse additionnelle 64 au moyen de la deuxième source lumineuse 62.

Une hauteur H₆₃ et une largeur L₆₃ de la première bande lumineuse additionnelle 63 sont égales à une hauteur H₆₄ et une largeur L₆₄ de la deuxième bande lumineuse additionnelle 64.

L'invention selon cette figure 3 est agencée pour que l'espace dépourvu de lumière entre la première bande lumineuse 4 et la deuxième bande lumineuse 5 soit comblé par la troisième bande lumineuse 22 et par la première bande lumineuse additionnelle 63. De même, les modules d'éclairage de cette figure sont arrangés pour que l'espace dépourvu de lumière entre la première bande lumineuse 4 et la quatrième bande lumineuse 23 soit comblé par la deuxième bande lumineuse additionnelle 64.

Cette variante à six bandes lumineuses répond à l'une quelconque des relations suivantes :
- L₆₃ + L₂₂ = E₁,
- L₂₂ + L₄ = E₆₀,
- d₆₀ / E₆₀ = I / L₆₃ = I₆₀ / L₆₄
- De préférence, H₆₃ = ¾ H₂₂, H₆₄ = ¾ H₄.

Où L₆₃ est la largeur de la première bande lumineuse additionnelle 63, L₂₂ est la largeur de la troisième bande lumineuse 22, E₁ est la largeur de l'espace entre la première bande lumineuse 4 et la deuxième bande lumineuse 5, L₄ est la largeur de la première bande lumineuse 4, E₆₀ est la largeur de l'espace entre la première bande lumineuse additionnelle 63 et la deuxième bande lumineuse additionnelle 64, d₆₀ est la distance qui sépare la première source lumineuse 61 de la deuxième source lumineuse 62 du module additionnel, L₆₀ est la longueur de l'une des sources lumineuse du module additionnel 60, L₆₄ est la largeur de la deuxième bande lumineuse additionnelle 64, I₆₀ est la largeur de l'une des sources lumineuse du module additionnel 60, de préférence identique à la seconde source lumineuse du même module, H₆₃ et H₆₄ sont respectivement les hauteur des première et deuxième bandes lumineuses additionnelles 63 et 64, et H₂₂ est la hauteur de la troisième bande lumineuse 22.

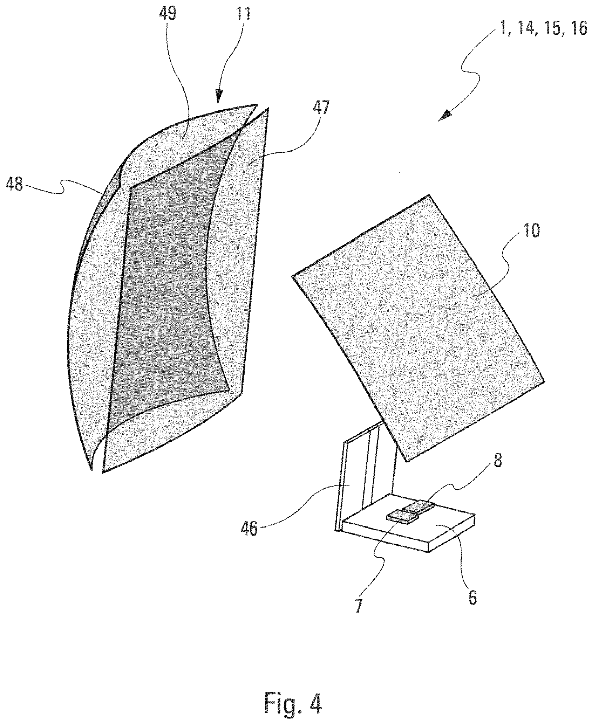

La figure 4 illustre un exemple de composants constitutifs d'un module d'éclairage.

La description ci-dessous sera faite en rapport avec le premier dispositif d'éclairage 1 mais elle s'applique également aux autres dispositifs d'éclairage décrits ci-dessus.

Le support 6 est une plaque ou carte de circuit imprimé qui reçoit sur une même face la première source lumineuse 7 et la deuxième source lumineuse 8. Celles-ci sont des diodes électroluminescentes de forme rectangulaire. Le support peut également recevoir des composants électroniques, par exemple, nécessaires à l'allumage ou à l'extinction de ces sources, ou à leur protection.

Perpendiculairement au plan d'extension du support 6, on trouve un obturateur 46 dont la fonction est d'empêcher une émission directe des rayons de lumière générés par les sources vers le dispositif de projection 11. Cet obturateur peut notamment présenter une surface non-réfléchissante de manière à interdire toute réflexion des rayons lumineux vers le moyen de réflexion 10. Ce dernier prend, par exemple, une forme parabolique ou éventuellement elliptique. Il peut par exemple s'agir d'un miroir plat, concave, convexe ou à surfaces complexes. Enfin, dans une variante de réalisation de type anamorphose, un tel moyen de réflexion 10 est un miroir cylindrique d'axe horizontal perpendiculaire à l'axe optique, de section droite proche d'une hyperbole.

Le dispositif de projection 11 est par exemple une lentille, notamment stigmatique, et présentant une première paroi 47 qui fait directement face au moyen de réflexion 10. Cette première paroi 47 est ici cylindrique, d'axe vertical.

La lentille est délimitée par une deuxième paroi 48 qui est opposée à la première paroi 47 par rapport à un corps 49 de la lentille. Cette deuxième paroi 48 présente une forme concave vue de la première paroi 47.

Les faisceaux lumineux sont émis par la première source lumineuse 7 et par la deuxième source lumineuse 8 et viennent frapper une surface du moyen de réflexion 10. Ce dernier les redirige vers le dispositif de projection 11 pour se projeter sur la route à emprunter par le véhicule.

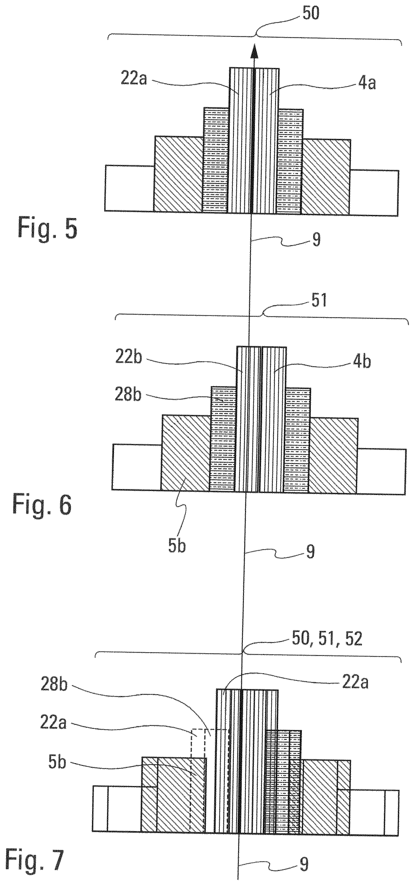

La figure 5 illustre le positionnement des huit bandes lumineuses générées par quatre modules d'éclairage et formant un premier faisceau d'éclairage 50 d'un premier projecteur installé à l'avant d'un véhicule. Un indice a est donné aux références utilisées ci-dessus pour indiquer qu'il s'agit du premier projecteur et un indice b est donné à ces mêmes références pour le deuxième projecteur.

On constate que les modules d'éclairage sont agencés dans le premier projecteur de manière à ce que la première bande lumineuse 4a et la troisième bande lumineuse 22a soient disposées de part et d'autre de l'axe optique 9. Le premier faisceau d'éclairage 50 est ainsi centré sur l'axe optique 9.

La figure 6 montre un deuxième faisceau d'éclairage 51 généré par un deuxième projecteur installé à l'avant du véhicule. Ce deuxième faisceau d'éclairage 51 est réalisé par une pluralité de bandes lumineuses créée par quatre modules d'éclairage identiques à ceux décrits ci-dessus, en rapport avec le premier projecteur.

La différence réside dans le placement de ce deuxième faisceau d'éclairage 51 par rapport à l'axe optique 9. Ce deuxième faisceau d'éclairage est décalé, par exemple, sur la droite d'une valeur égale à une demi-largeur d'une première bande lumineuse 4a généré par un premier module d'éclairage installé dans le premier projecteur. En d'autres termes, une troisième bande lumineuse 22b chevauche l'axe optique 9, notamment en passant au centre de cette dernière, selon sa largeur.

Un tel décalage est obtenu en inclinant les quatre modules d'éclairage du deuxième projecteur d'une valeur égale à 1°, quand la largeur de la première bande lumineuse résulte d'un faisceau d'ouverture angulaire égale à 2°.

La figure 7 illustre un faisceau global émis par le véhicule automobile, c'est-à-dire émis par le premier projecteur et par le deuxième projecteur. Ce faisceau global 52 est donc une superposition du premier faisceau d'éclairage 50 sur le deuxième faisceau d'éclairage 51, le deuxième faisceau d'éclairage étant décalé d'une demi-largeur de la première bande lumineuse.

Une telle structure augmente la résolution de la fonction ADB mise en oeuvre par les modules d'éclairage des deux projecteurs. Pour illustrer cet avantage, la figure 7 montre le faisceau globale 52 dans lequel la cinquième bande lumineuse 28a du premier projecteur et la cinquième bande lumineuse 28b du deuxième projecteur sont éteintes, notamment quand la présence d'une véhicule dans cette zone a été détectée. On constate que la zone non-éclairée présente une largeur égale à une demi-largeur de la première bande lumineuse, cette zone non-éclairée se situant alors entre la troisième bande lumineuse 22a généré par le premier projecteur et la deuxième bande lumineuse 5b généré par le deuxième projecteur.

En éteignant au moins un couple de sources lumineuses située l'une dans un premier projecteur et l'autre dans un deuxième projecteur, on améliore la résolution de la fonction ADB, ce qui augmente le champ de vision éclairé du conducteur, sans éblouir le conducteur du véhicule détecté, au moyen d'un nombre réduit de modules d'éclairage comparé au dispositif de l'art antérieur.

Dans le texte ci-dessus, les largeurs sont mesurées selon une direction horizontale alors que les hauteurs sont mesurées selon une direction verticale.

## Revendications

1. Module d'éclairage (1, 14, 15, 16) pour projecteur de véhicule automobile, comprenant :
▪ au moins une première source lumineuse (7, 18, 25, 34) et une deuxième source lumineuse (8, 19, 24, 33) sensiblement rectangulaires, lesdites sources lumineuses étant solidarisées sur un même support (6) et espacées l'une de l'autre,
▪ un moyen de réflexion (10, 29, 38, 42) et un dispositif de projection (11, 30, 39, 43) commun auxdites sources lumineuses qui participent à la formation d'une première bande lumineuse (4, 4a, 4b) générée par la première source lumineuse (7, 18, 25, 34) et à la formation d'une deuxième bande lumineuse (5, 5b) générée par la deuxième source lumineuse (8, 19, 24, 33),
▪ la deuxième source lumineuse (8, 19, 24, 33) étant installée sur le support (6) de manière à ce qu'une deuxième direction (13) définissant sa longueur soit orientée selon un angle compris entre 80° et 100° par rapport à une première direction (12) définissant une longueur de la première source lumineuse (7, 18, 25, 34), et en ce que
▪ le module d'éclairage (1, 14,15, 16) est destiné à émettre un faisceau lumineux remplissant une fonction d' « éclairage route partiel », tel **que** l'espace qui sépare la première source lumineuse (7, 18, 25, 34) de la deuxième source lumineuse (8, 19, 24, 33) génère une zone non-éclairée par le module d'éclairage située entre la première bande lumineuse (4, 4a, 4b) et la deuxième bande lumineuse (5, 5b), **caractérisé en ce que**
le moyen de réflexion (10, 29, 38, 42) est commun à la première source lumineuse (7, 18, 25, 34) et à la deuxième source lumineuse (8, 19, 24, 33),
**et en ce que**
les première (7, 18, 25, 34) et deuxième (8, 19, 24, 33) sources lumineuses sensiblement rectangulaires sont de largeurs sensiblement identiques et de longueurs sensiblement identiques.

2. Module selon la revendication 1, dans lequel l'angle est égal à 90°.

3. Module selon la revendication 1, dans lequel l'espace est dimensionné pour que la zone non-éclairée soit sensiblement égale à deux fois une largeur (H₄) de la première bande lumineuse (4, 4a, 4b), mesurée sur un écran perpendiculaire à un axe optique (9) du projecteur et situé à 25 mètres de ce dernier.

4. Module selon l'une quelconque des revendications précédentes, dans lequel la première bande lumineuse (4, 4a, 4b) résulte d'un premier faisceau lumineux (2) qui présente une inclinaison (17) comprise entre +0,5° et +4° par rapport à un axe optique (9) du projecteur, mesurée dans un plan horizontal.

5. Projecteur pour véhicule automobile comprenant au moins un premier module d'éclairage (1) et un deuxième module d'éclairage (14) selon l'une quelconque des revendications 1 à 4.

6. Projecteur selon la revendication 5, comprenant un module additionnel d'éclairage (60) comprenant un support sur lequel sont solidarisées au moins deux sources lumineuses additionnelles (61, 62), lesdites sources étant agencées pour qu'une longueur de chaque source s'étende selon une direction parallèle.

7. Projecteur selon la revendication 5 ou 6, dans lequel la première source lumineuse (7) du premier module d'éclairage (1) et la première source lumineuse (18) du deuxième module d'éclairage (14) sont installées entre la deuxième source lumineuse (8) du premier module d'éclairage (1) et la deuxième source lumineuse (19) du deuxième module d'éclairage (14).

8. Projecteur selon la revendication 7, dans lequel la première bande lumineuse (4, 4a) du premier module d'éclairage (1) résulte d'un premier faisceau lumineux (2) qui présente une inclinaison (17) sensiblement égale à la moitié d'une largeur (L₄) de la première bande lumineuse (4, 4a), mesurée dans un plan horizontal, la première source lumineuse (18) du deuxième module d'éclairage (14) génère une troisième bande lumineuse (22) qui résulte d'un troisième faisceau lumineux (20) présentant une inclinaison (44) sensiblement égale la moitié d'une largeur (L₂₂) de la troisième bande lumineuse (22), mesurée dans le plan horizontal.

9. Projecteur selon la revendication 8, dans lequel l'inclinaison (17) du premier faisceau lumineux (2) et l'inclinaison (44) du troisième faisceau lumineux (20) mesurées dans un plan horizontal et par rapport à l'axe optique résulte d'une ouverture angulaire égale à 2°.

10. Projecteur selon l'une quelconque des revendications 5 à 9, comprenant un troisième module d'éclairage (15) et un quatrième module d'éclairage (16) conformes à l'une quelconque des revendications 1 à 4.

11. Projecteur selon la revendication 10, dans lequel le premier module d'éclairage (1) et le deuxième module d'éclairage (14) sont installés entre le troisième module d'éclairage (15) et le quatrième module d'éclairage (16), la deuxième source lumineuse (24) du troisième module d'éclairage (15) étant installée entre la première source lumineuse (25) du troisième module d'éclairage (15) et la deuxième source lumineuse (19) du deuxième module d'éclairage (14) alors que la deuxième source lumineuse (33) du quatrième module d'éclairage (16) est installé entre la deuxième source lumineuse (8) du premier module d'éclairage (1) et la première source lumineuse (34) du quatrième module d'éclairage (16).

12. Projecteur selon la revendication 10 ou 11, dans lequel la première source lumineuse (25) du troisième module d'éclairage (14) génère une cinquième bande lumineuse (28, 28a, 28b) qui résulte d'un cinquième faisceau lumineux (26) présentant une inclinaison (27) sensiblement égale à la somme d'une demi-largeur (L₂₈) de la cinquième bande lumineuse (28, 28a, 28b) et d'une largeur (L₂₂) d'une troisième bande lumineuse (22), mesurée dans un plan horizontal, la première source lumineuse (34) du quatrième module d'éclairage (16) générant une septième bande lumineuse (37) qui résulte d'un septième faisceau lumineux (36) dont l'inclinaison (35) dans le plan horizontal est sensiblement égale à la somme d'une demi-largeur (L₃₇) de la septième bande lumineuse (37) et d'une largeur (L₄) de la première bande lumineuse (4).

13. Projecteur selon la revendication 12, dans lequel l'inclinaison (27) du cinquième faisceau lumineux (26) et l'inclinaison (35) du septième faisceau lumineux (36) mesurées dans un plan horizontal et par rapport à l'axe optique résulte d'une ouverture angulaire égale à 3°.

14. Système d'éclairage pour véhicule automobile comprenant un premier projecteur et un deuxième projecteur selon l'une quelconque des revendications 5 à 13, le premier projecteur projetant un premier faisceau d'éclairage (50) généré par une pluralité de modules d'éclairage (1, 14, 15, 16), le deuxième projecteur projetant un deuxième faisceau d'éclairage (51) généré par une pluralité de modules d'éclairage (1, 14, 15, 16), la pluralité de modules d'éclairage du deuxième projecteur étant agencée de manière à décaler le deuxième faisceau d'éclairage (51) par rapport au premier faisceau d'éclairage (50) d'une demi-largeur de la première bande lumineuse (4, 4a) générée par le premier module d'éclairage (1) installé dans le premier projecteur.

15. Système selon la revendication 14, dans lequel la pluralité de modules d'éclairage (1, 14, 15, 16) du deuxième projecteur est inclinée d'une demi-largeur de la première bande lumineuse (4) dans un plan horizontal.

## Patentansprüche

1. Beleuchtungsmodul (1, 14, 15, 16) für einen Kraftfahrzeugscheinwerfer, welches umfasst:
• wenigstens eine erste Lichtquelle (7, 18, 25, 34) und eine zweite Lichtquelle (8, 19, 24, 33), die im Wesentlichen rechteckig sind, wobei die Lichtquellen auf ein und demselben Träger (6) fest miteinander verbunden und voneinander beabstandet sind,
• ein Reflexionsmittel (10, 29, 38, 42) und eine Projektionsvorrichtung (11, 30, 39, 43), die den Lichtquellen gemeinsam sind und die an der Bildung eines ersten Lichtbandes (4, 4a, 4b), das von der ersten Lichtquelle (7, 18, 25, 34) erzeugt wird, und an der Bildung eines zweiten Lichtbandes (5, 5b), das von der zweiten Lichtquelle (8, 19, 24, 33) erzeugt wird, beteiligt sind,
• wobei die zweite Lichtquelle (8, 19, 24, 33) derart auf dem Träger (6) angebracht ist, dass eine zweite Richtung (13), die ihre Länge definiert, unter einem Winkel, der zwischen 80° und 100° liegt, bezüglich einer ersten Richtung (12) ausgerichtet ist, die eine Länge der ersten Lichtquelle (7, 18, 25, 34) definiert, und dadurch, dass
• das Beleuchtungsmodul (1, 14, 15, 16) dazu bestimmt ist, ein Lichtbündel auszusenden, das eine Funktion eines "Teilfernlichts" erfüllt, derart, dass der Zwischenraum, welcher die erste Lichtquelle (7, 18, 25, 34) von der zweiten Lichtquelle (8, 19, 24, 33) trennt, einen von dem Beleuchtungsmodul nicht beleuchteten Bereich erzeugt, der sich zwischen dem ersten Lichtband (4, 4a, 4b) und dem zweiten Lichtband (5, 5b) befindet,
**dadurch gekennzeichnet, dass**
das Reflexionsmittel (10, 29, 38, 42) der ersten Lichtquelle (7, 18, 25, 34) und der zweiten Lichtquelle (8, 19, 24, 33) gemeinsam ist,
und dadurch, dass
die erste (7, 18, 25, 34) und die zweite Lichtquelle (8, 19, 24, 33), die im Wesentlichen rechteckig sind, im Wesentlichen identische Breiten und im Wesentlichen identische Längen aufweisen.

2. Modul nach Anspruch 1, wobei der Winkel gleich 90° ist.

3. Modul nach Anspruch 1, wobei der Zwischenraum so bemessen ist, dass der nicht beleuchtete Bereich im Wesentlichen gleich dem Zweifachen einer Breite (H₄) des ersten Lichtbandes (4, 4a, 4b) ist, gemessen auf einem Schirm, der zu einer optischen Achse (9) des Scheinwerfers senkrecht ist und 25 Meter von diesem Letzteren entfernt ist.

4. Modul nach einem der vorhergehenden Ansprüche, wobei das erste Lichtband (4, 4a, 4b) aus einem ersten Lichtbündel (2) resultiert, welches eine Neigung (17) zwischen +0,5° und +4° bezüglich einer optischen Achse (9) des Scheinwerfers, gemessen in einer horizontalen Ebene, aufweist.

5. Scheinwerfer für ein Kraftfahrzeug, welcher wenigstens ein erstes Beleuchtungsmodul (1) und ein zweites Beleuchtungsmodul (14) nach einem der Ansprüche 1 bis 4 umfasst.

6. Scheinwerfer nach Anspruch 5, welcher ein zusätzliches Beleuchtungsmodul (60) umfasst, das einen Träger umfasst, auf welchem wenigstens zwei zusätzliche Lichtquellen (61, 62) fest miteinander verbunden sind, wobei diese Lichtquellen so ausgebildet sind, dass sich eine Länge jeder Lichtquelle entlang einer parallelen Richtung erstreckt.

7. Scheinwerfer nach Anspruch 5 oder 6, wobei die erste Lichtquelle (7) des ersten Beleuchtungsmoduls (1) und die erste Lichtquelle (18) des zweiten Beleuchtungsmoduls (14) zwischen der zweiten Lichtquelle (8) des ersten Beleuchtungsmoduls (1) und der zweiten Lichtquelle (19) des zweiten Beleuchtungsmoduls (14) angebracht sind.

8. Scheinwerfer nach Anspruch 7, wobei das erste Lichtband (4, 4a) des ersten Beleuchtungsmoduls (1) aus einem ersten Lichtbündel (2) resultiert, welches eine Neigung (17) aufweist, die im Wesentlichen gleich der Hälfte einer Breite (L₄) des ersten Lichtbandes (4, 4a) ist, gemessen in einer horizontalen Ebene, die erste Lichtquelle (18) des zweiten Beleuchtungsmoduls (14) ein drittes Lichtband (22) erzeugt, welches aus einem dritten Lichtbündel (20) resultiert, das eine Neigung (44) aufweist, die im Wesentlichen gleich der Hälfte einer Breite (L₂₂) des dritten Lichtbandes (22) ist, gemessen in der horizontalen Ebene.

9. Scheinwerfer nach Anspruch 8, wobei die Neigung (17) des ersten Lichtbündels (2) und die Neigung (44) des dritten Lichtbündels (20), gemessen in einer horizontalen Ebene und bezüglich der optischen Achse, aus einer Winkelöffnung resultieren, die gleich 2° ist.

10. Scheinwerfer nach einem der Ansprüche 5 bis 9, welcher ein drittes Beleuchtungsmodul (15) und ein viertes Beleuchtungsmodul (16) nach einem der Ansprüche 1 bis 4 umfasst.

11. Scheinwerfer nach Anspruch 10, wobei das erste Beleuchtungsmodul (1) und das zweite Beleuchtungsmodul (14) zwischen dem dritten Beleuchtungsmodul (15) und dem vierten Beleuchtungsmodul (16) angebracht sind, wobei die zweite Lichtquelle (24) des dritten Beleuchtungsmoduls (15) zwischen der ersten Lichtquelle (25) des dritten Beleuchtungsmoduls (15) und der zweiten Lichtquelle (19) des zweiten Beleuchtungsmoduls (14) angebracht ist, während die zweite Lichtquelle (33) des vierten Beleuchtungsmoduls (16) zwischen der zweiten Lichtquelle (8) des ersten Beleuchtungsmoduls (1) und der ersten Lichtquelle (34) des vierten Beleuchtungsmoduls (16) angebracht ist.

12. Scheinwerfer nach Anspruch 10 oder 11, wobei die erste Lichtquelle (25) des dritten Beleuchtungsmoduls (14) ein fünftes Lichtband (28, 28a, 28b) erzeugt, welches aus einem fünften Lichtbündel (26) resultiert, das eine Neigung (27) aufweist, die im Wesentlichen gleich der Summe einer halben Breite (L₂₈) des fünften Lichtbandes (28, 28a, 28b) und einer Breite (L₂₂) eines dritten Lichtbandes (22) ist, gemessen in einer horizontalen Ebene, wobei die erste Lichtquelle (34) des vierten Beleuchtungsmoduls (16) ein siebentes Lichtband (37) erzeugt, welches aus einem siebenten Lichtbündel (36) resultiert, dessen Neigung (35) in der horizontalen Ebene im Wesentlichen gleich der Summe einer halben Breite (L₃₇) des siebenten Lichtbandes (37) und einer Breite (L₄) des ersten Lichtbandes (4) ist.

13. Scheinwerfer nach Anspruch 12, wobei die Neigung (27) des fünften Lichtbündels (26) und die Neigung (35) des siebenten Lichtbündels (36), gemessen in einer horizontalen Ebene und bezüglich der optischen Achse, aus einer Winkelöffnung resultieren, die gleich 3° ist.

14. Beleuchtungssystem für ein Kraftfahrzeug, welches einen ersten Scheinwerfer und einen zweiten Scheinwerfer nach einem der Ansprüche 5 bis 13 umfasst, wobei der erste Scheinwerfer ein erstes Lichtbündel (50) aussendet, das von mehreren Beleuchtungsmodulen (1, 14, 15, 16) erzeugt wird, wobei der zweite Scheinwerfer ein zweites Lichtbündel (51) aussendet, das von mehreren Beleuchtungsmodulen (1, 14, 15, 16) erzeugt wird, wobei die mehreren Beleuchtungsmodule des zweiten Scheinwerfers derart angeordnet sind, dass sie das zweite Lichtbündel (51) bezüglich des ersten Lichtbündels (50) um eine halbe Breite des ersten Lichtbandes (4, 4a) versetzen, das von dem ersten Beleuchtungsmodul (1) erzeugt wird, das in dem ersten Scheinwerfer angebracht ist.

15. System nach Anspruch 14, wobei die mehreren Beleuchtungsmodule (1, 14, 15, 16) des zweiten Scheinwerfers um eine halbe Breite des ersten Lichtbandes (4) in einer horizontalen Ebene geneigt sind.

## Claims

1. Lighting module (1, 14, 15, 16) for a motor-vehicle headlight, comprising:
▪ at least one first light source (7, 18, 25, 34) and one second light source (8, 19, 24, 33) that are substantially rectangular, the said light sources being secured to one and the same support (6) and spaced apart from one another,
▪ a reflection means (10, 29, 38, 42) and a projection device (11, 30, 39, 43) that is common to the said light sources, which participate in the formation of a first light strip (4, 4a, 4b) generated by the first light source (7, 18, 25, 34) and in the formation of a second light strip (5, 5b) generated by the second light source (8, 19, 24, 33),
▪ the second light source (8, 19, 24, 33) being installed on the support (6) so that a second direction (13) defining its length is oriented at an angle of between 80° and 100° relative to a first direction (12) defining a length of the first light source (7, 18, 25, 34), and in that
▪ the lighting module (1, 14, 15, 16) is intended to emit a light beam fulfilling a function of "partial road lighting",
▪ such that the space that separates the first light source (7, 18, 25, 34) from the second light source (8, 19, 24, 33) generates a zone that is unlit by the lighting module and that is situated between the first light strip (4, 4a, 4b) and the second light strip (5, 5b),
▪ **characterized in that**
the reflection means (10, 29, 38, 42) is common to the first light source (7, 18, 25, 34) and to the second light source (8, 19, 24, 33),
and **in that**
the first (7, 18, 25, 34) and second (8, 19, 24, 33) substantially rectangular light sources have substantially identical widths and substantially identical lengths.

2. Module according to Claim 1, in which the angle is equal to 90°.

3. Module according to Claim 1, in which the space is dimensioned so that the unlit zone is substantially equal to twice a width (H₄) of the first light strip (4, 4a, 4b), measured on a screen perpendicular to an optical axis (9) of the headlight and situated at 25 metres from the latter.

4. Module according to any one of the preceding claims, in which the first light strip (4, 4a, 4b) results from a first light beam (2) that has an inclination (17) of between +0.5° and +4° relative to an optical axis (9) of the headlight, measured in a horizontal plane.

5. Headlight for a motor vehicle comprising at least one first lighting module (1) and one second lighting module (14) according to any one of Claims 1 to 4.

6. Headlight according to Claim 5, comprising an additional lighting module (60) comprising a support to which are secured at least two additional light sources (61, 62), the said sources being arranged so that a length of each source extends in a parallel direction.

7. Headlight according to Claim 5 or 6, in which the first light source (7) of the first lighting module (1) and the first light source (18) of the second lighting module (14) are installed between the second light source (8) of the first lighting module (1) and the second light source (19) of the second lighting module (14).

8. Headlight according to Claim 7, in which the first light strip (4, 4a) of the first lighting module (1) results from a first light beam (2) which has an inclination (17) substantially equal to half a width (L₄) of the first light strip (4, 4a), measured in a horizontal plane, the first light source (18) of the second lighting module (14) generates a third light strip (22) which results from a third light beam (20) having an inclination (44) substantially equal to half a width (L₂₂) of the third light strip (22), measured in the horizontal plane.

9. Headlight according to Claim 8, in which the inclination (17) of the first light beam (2) and the inclination (44) of the third light beam (20) measured in a horizontal plane and relative to the optical axis results from an angular aperture equal to 2°.

10. Headlight according to any one of Claims 5 to 9, comprising a third lighting module (15) and a fourth lighting module (16) according to any one of Claims 1 to 4.

11. Headlight according to Claim 10, in which the first lighting module (1) and the second lighting module (14) are installed between the third lighting module (15) and the fourth lighting module (16), the second light source (24) of the third lighting module (15) being installed between the first light source (25) of the third lighting module (15) and the second light source (19) of the second lighting module (14) while the second light source (33) of the fourth lighting module (16) is installed between the second light source (8) of the first lighting module (1) and the first light source (34) of the fourth lighting module (16).

12. Headlight according to Claim 10 or 11, in which the first light source (25) of the third lighting module (14) generates a fifth light strip (28, 28a, 28b) which results from a fifth light beam (26) having an inclination (27) substantially equal to the total of a half-width (L₂₈) of the fifth light strip (28, 28a, 28b) and of a width (L₂₂) of a third light strip (22), measured in a horizontal plane, the first light source (34) of the fourth lighting module (16) generating a seventh light strip (37) which results from a seventh light beam (36) of which the inclination (35) in the horizontal plane is substantially equal to the total of a half-width (L₃₇) of the seventh light strip (37) and a width (L₄) of the first light strip (4).

13. Headlight according to Claim 12, in which the inclination (27) of the fifth light beam (26) and the inclination (35) of the seventh light beam (36) measured in a horizontal plane and relative to the optical axis results from an angular aperture equal to 3°.

14. Lighting system for a motor vehicle comprising a first headlight and a second headlight according to any one of Claims 5 to 13, the first headlight projecting a first lighting beam (50) generated by a plurality of lighting modules (1, 14, 15, 16), the second headlight projecting a second lighting beam (51) generated by a plurality of lighting modules (1, 14, 15, 16), the plurality of lighting modules of the second headlight being arranged so as to offset the second lighting beam (51) relative to the first lighting beam (50) by a half-width of the first light strip (4, 4a) generated by the first lighting module (1) installed in the first headlight.

15. System according to Claim 14, in which the plurality of lighting modules (1, 14, 15, 16) of the second headlight is inclined by a half-width of the first light strip (4) in a horizontal plane.
